# EUROPEAN PATENT APPLICATION

(11) **EP 0 786 334 A2**
(43) Date of publication of application: **30.07.1997**
(21) Application number: 97101055.8
(22) Date of filing: 23.01.1997
(51) Int. Cl.: B32B 31/00

(54) **Pouch laminator**

(30) Priority: 29.01.1996 US 593210
(71) Applicant: FELLOWES MANUFACTURING COMPANY, Itasca, Illinois 60143-1095 (US)
(72) Inventor: Fellowes, Peter A., Glen Ellyn, Illinois 60137 (US)
(74) Representative: Haug, Dietmar, Dipl.-Ing.

(57) **Abstract**

A pouch laminator includes a first side panel (12) and a second side panel (14). A heater (20) having an entrance and an exit is placed between the first and second side panels. A pair of vertically stacked rollers is positioned at the entrance and the exit of the heater. A drive mechanism is used to drive the rollers. In addition, a thermal sensor (50) is disposed near the heater and a pouch presence detector (60) is placed near the rollers at the entrance of the heater.

## Description

### BACKGROUND OF THE INVENTION

This invention relates to an improved pouch laminator. More specifically, the invention relates to an inexpensive and energy efficient pouch laminator.

Laminators, such as pouch laminators, are used to seal a variety of different objects. Such objects may include a driver's license, an identification card, a credit card, a photograph, or a sheet of paper. Generally, the pouch lamination process includes the following steps. First, an object is placed between layers of thermoplastic sheet and then placed inside of a packet-type pouch. Next, the pouch and its contents are passed through a heat sealing laminator. After exiting the laminator, the pouch and its contents are cooled and the pouch is opened to recover the object enclosed in thermoplastic.

One example of a laminator that uses a heater and a pair of rollers on each side of the heater is described in Marvel, U.S. Pat. No. 4,451,320. Marvel shows a laminating machine for laminating a packet by passing it between the two heating platens of the heater. The packet is driven through the heater platens by the pair of rollers in front of the heating platens and the pair of rollers behind the heating platens. However, the Marvel laminator does not include a thermal sensor or a pouch presence detector and the laminator operates continuously at full power until shut off by the user. As a result, the Marvel laminator wastes electrical power and may present a fire hazard.

Another example of a laminator that uses a heater and a pair of rollers in front of the heater is described in Liu, U.S. Pat. No. 5,232,538. Liu shows a laminating machine for laminating paper or a card by passing it through the heater. The paper or card is driven through the heater by the pair of rollers in front of the heater. After exiting the heater, two cooling plates are used to cool the laminated paper or card. In addition, a thermal sensor is used to monitor the temperature of the heater and consequently turn the heater on or off when the temperature is lower or higher than the preset temperature. The Liu laminator, however, does not include a pouch presence detector and the laminator operates continuously at full power until shut off by the user. Therefore, the Liu laminator poses the same problems as the Marvel laminator.

One example of a laminator that uses a heater with an automatic shut off and a pair of rollers behind the heater is described in Vercillo, U.S. Pat. No. 4,311,549. Vercillo shows a laminating machine for laminating a packet by passing it through the heater. After the leading edge of a packet is placed in the heater of the laminator, the user may manually activate the heater. Power is then supplied to the heater until a first temperature is detected by a thermistor placed on the heater. When the heater reaches the first temperature, the pair of rollers behind the heater pulls the packet through the heater. While the packet moves through the heater, power is supplied to the heater until it reaches a second temperature. The heater is turned on or off depending on whether its temperature is lower or higher than the second temperature. A photocell is used to disconnect power to the heater when it detects that the packet has exited the heater.

Although the Vercillo laminator uses a photocell to detect when the packet has exited the heater, the photocell does not automatically cause power to be supplied to the heater when a packet or pouch has been detected near the entrance of the laminator. Instead, Vercillo discloses that an operator must manually lower a command lever in order to supply electrical power the heater.

Accordingly, it is an object of the present invention to provide a laminator that is an improvement over the above prior art laminators. In the present invention, a laminator is provided with a heater, two pairs of rollers, a pouch presence detector for detecting the presence of a pouch, a thermal sensor for sensing the temperature of a heater, and a timing circuit for disconnecting power to the laminator. As a result, the laminator of the present invention has an automatic start and an automatic shut off that allows it to be more energy efficient compared to prior art laminators.

### SUMMARY OF THE INVENTION

The present invention provides a pouch laminator comprising a first side panel and a second side panel. A heater having an entrance and an exit is placed between the first and second side panels. A pair of vertically stacked rollers is positioned at the entrance and the exit of the heater. A drive mechanism is used to drive the rollers. In addition, a thermal sensor is disposed near the heater and a pouch presence detector is placed near the rollers at the entrance of the heater.

### BRIEF DESCRIPTION OF THE DRAWINGS

FIG. 1 is a perspective view a pouch laminator of the present invention inside a transparent housing. The housing is transparent to show the details of the pouch laminator of the present invention.

FIG. 2 is an exploded view of the pouch laminator of FIG. 1.

FIG. 3 is a cross-sectional view of the pouch laminator of FIG. 1 taken along line 3-3.

FIG. 4 is a cross-sectional view of the pouch laminator of FIG. 1 taken along line 4-4.

FIG. 5 is a cross-sectional view of the pouch laminator of FIG. 1 taken along line 5-5.

FIG. 6 is a flow chart showing an operation mode of the pouch laminator of the present invention.

### DETAILED DESCRIPTION OF THE PREFERRED EMBODIMENTS

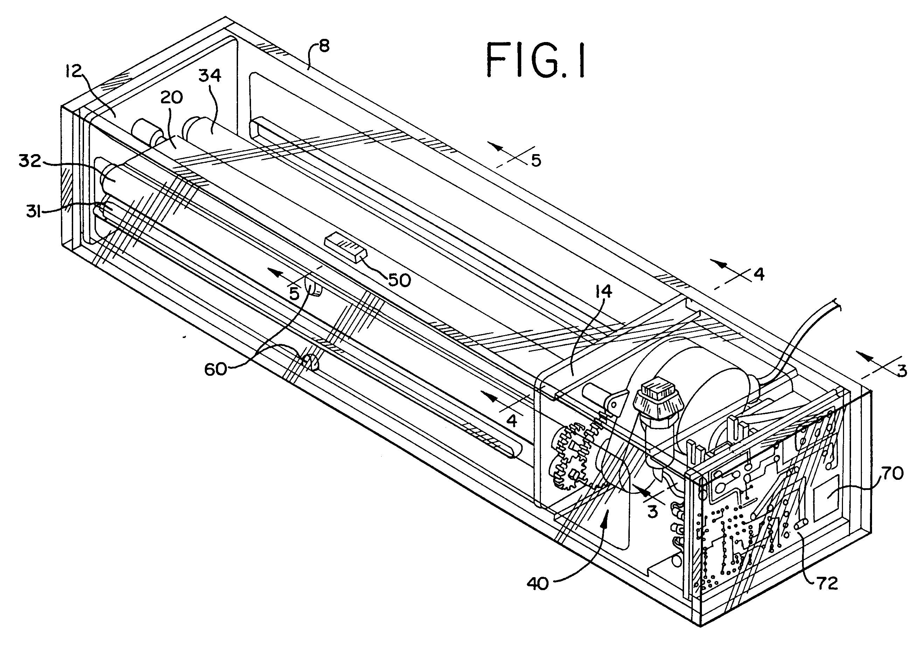

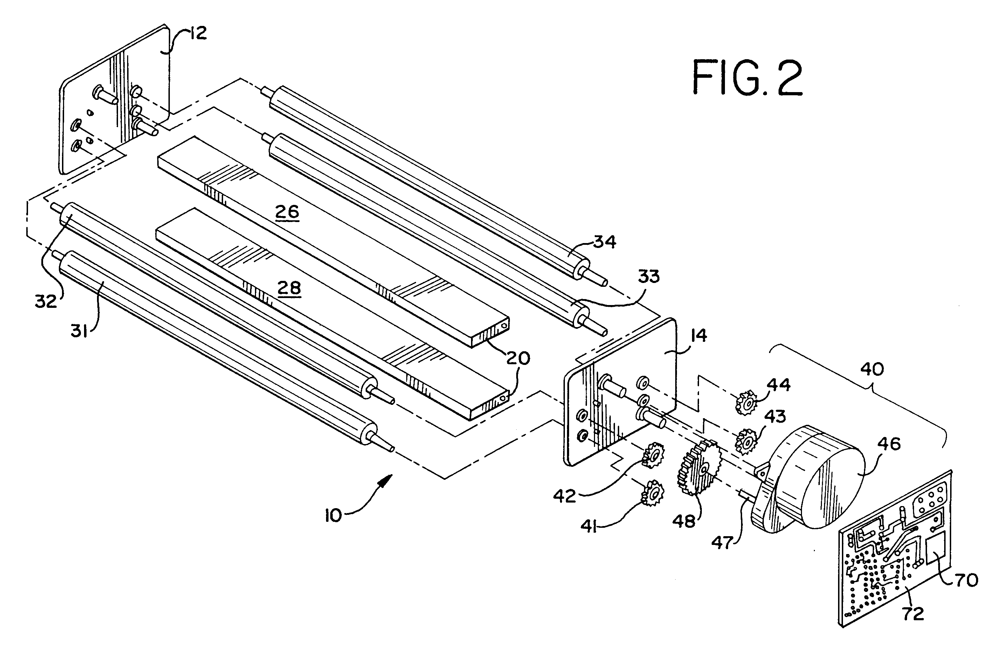

Turning now to the drawings, FIG. 1 depicts the pouch laminator of the present invention disposed within a housing 8. As seen in FIGS. 1 and 2, the pouch laminator 10 comprises a first and a second side panel 12, 14, a heater 20 for heating a pouch, two pairs of rollers 31, 32, 33, 34, for moving a pouch through the heater, a drive mechanism 40 for driving the rollers, a thermal sensor 50 for sensing the heat temperature of the heater, and a pouch presence detector 60 for detecting the presence of a pouch.

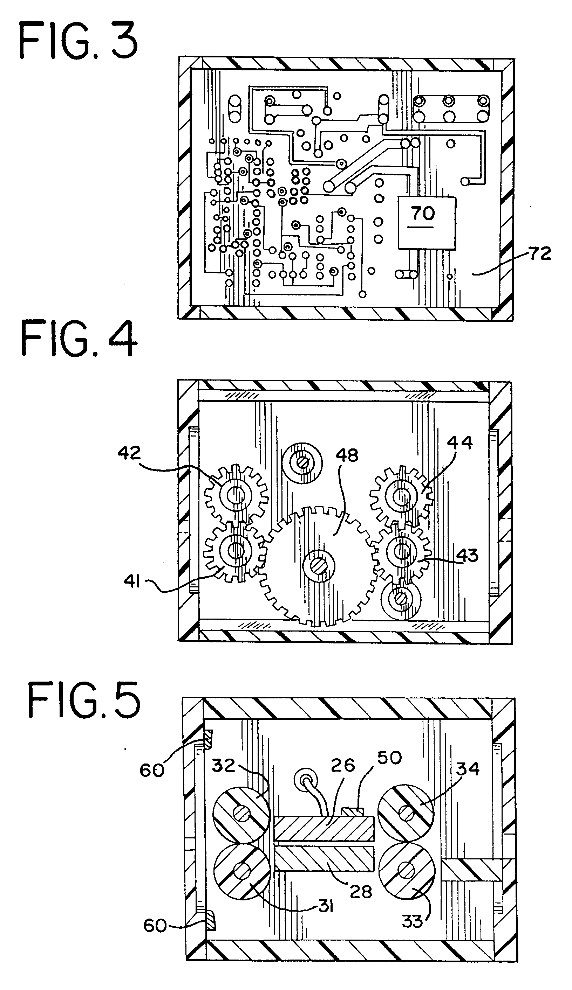

As shown in FIG. 1, the first side panel 12 is spaced from the second side panel 14. The heater 20 is disposed between the first and second side panels. As best seen in FIG. 5, the heater 20 has an entrance 22 and an exit 24, and is adapted to allow a pouch to pass from the entrance, through the heater, and out the exit.

Preferably, the heater 20 is comprised of a first and a second heat platen 26, 28. The first platen 26 is spaced from the second platen 28 to allow a pouch to pass between the first and second heat platens.

The two pairs of rollers include a first roller 31, a second roller 32, a third roller 33, and a fourth roller 34. The first and second rollers 31, 32 are disposed between the first and second side panels 12, 14 near the entrance 22 of the heater. The third and fourth rollers 33, 34 are disposed between the first and second side panels 12, 14 near the exit 24 of the heater. The second roller 32 is vertically stacked on top of the first roller 31 and the fourth roller 34 is vertically stacked on top of the third roller 33. This arrangement allows each pair of rollers to both compress and drive the pouch passing between them.

The first and second rollers are aligned coplanar with the entrance of the heater, while the third and fourth rollers are aligned coplanar with the exit of the heater. This alignment provides a straight path for the pouch to pass through the heater by way of the rollers.

Preferably, at least a portion of the rollers is made of rubber. The use of rubber in the rollers aids in gripping and moving the pouch through the heater.

As shown in FIGS. 1 and 2, the drive mechanism 40 for driving the two pairs of rollers includes a first roller gear 41, a second roller gear 42, a third roller gear 43, a fourth roller gear 44, a motor 46, and a drive gear 48. The first and second roller gears 41, 42 are disposed on the outside of the second side panel 14 and coupled to the first and second rollers 31, 32, respectively. Similarly, the third and fourth roller gears 43, 44 are disposed on the outside of the second side panel 14 and coupled to the third and fourth rollers 33, 34, respectively.

The first and second roller gears engage each other, while the third and fourth roller gears engage each other, as shown in FIG. 4. As a result, when the first roller gear is driven in a clockwise direction, the second gear is rotated in a counterclockwise direction. Likewise, when the third roller gear is rotated in a clockwise direction, the fourth roller gear is rotated in a counterclockwise direction.

The motor 46 of the drive mechanism has an output shaft 47 and is disposed on the second side panel 14 of the pouch laminator. The drive gear 48 is coupled to the output shaft 47 of the motor 46 and engages either the first and third roller gears 41, 43 or the second and fourth roller gears 42, 44.

When electrical power is supplied to the motor, the output shaft rotates the drive gear, which in turn rotates either the first and third roller gears or the second and fourth roller gears. As described above, the rotation of either the first and third roller gears or the second and fourth roller gears causes the other roller gears to rotate in opposite directions. Since the four roller gears are coupled to the four rollers, the rotation of the roller gears causes the rollers to rotate in the same direction as the roller gears.

As shown in FIGS. 1 and 5, the thermal sensor 50 of the pouch laminator of the present invention is disposed near the heater 20 to sense the temperature of the heater. Preferably, the thermal sensor is positioned directly on the heater.

The pouch presence detector 60 of the pouch laminator of the present invention is disposed near the first and second rollers 31, 32 to detect the presence of a pouch that is ready to be laminated. Preferably, the pouch presence detector is positioned on a side of the first and second rollers 31, 32 opposite the entrance 22 of the heater.

The pouch laminator of the present invention also includes a timing circuit 70 disposed on a circuit board 72 spaced from the second side panel 14. The timing circuit 70 disconnects electrical power to the heater 20 and the drive mechanism 40 when the timing circuit is completed.

Preferably, the timing circuit is started automatically by the pouch presence detector when a pouch is detected, but it may be started manually by the user when a separate switch (not shown) is activated. The timing circuit may be set for any predetermined amount of time depending on the desired energy efficiency.

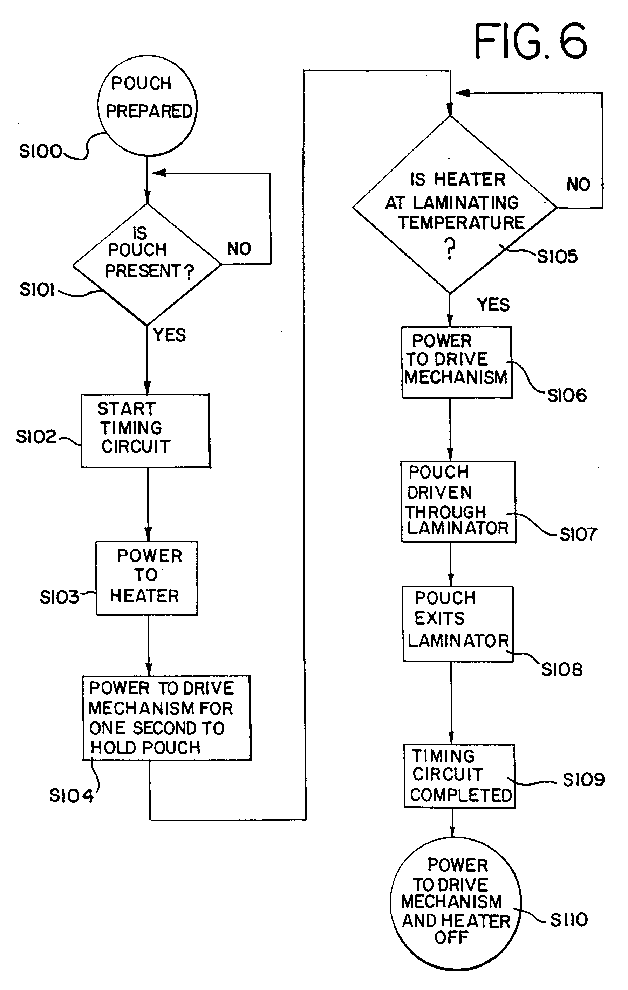

Turning now to FIG. 6, the pouch laminator of the present invention operates in the following manner. First, an object is placed between layers of thermoplastic sheet and then placed inside of a pouch (step S100). The pouch allows heat transfer from the heater to the layers of thermoplastic sheet, but prevents the heated layers of thermoplastic sheet from sticking to the heater or rollers. The pouch may have an envelope, folder, or packet-type structure.

Next, the pouch containing the substrate to be laminated is placed near the first and second rollers and detected by the pouch presence detector (step S101). The pouch presence detector starts the timing circuit (step S102) and electrical power is supplied to the heater (step S103). Electrical power is also supplied to the drive mechanism for a short period of time (step S104). Preferably, this short time period is one second. As a result, the first and second rollers are rotated and the pouch is grabbed and held between them.

The heater then heats up to a predetermined set laminating temperature (step S105). When the thermal sensor senses that the heater has reached the set laminating temperature, electrical power is again supplied to the drive mechanism (step S106). The drive mechanism then moves the pouch through the heater by driving the four rollers (step S107).

The above described operation of the laminator continues for any additional pouches that may placed near the first and second rollers and detected by the pouch presence detector. Each time a pouch is detected by the pouch presence detector, the timing circuit is restarted.

After exiting the laminator (step S108), the pouch and its contents are cooled and the pouch is opened to recover the laminated object. Once a predetermined amount of time passes, the timing circuit becomes completed (step S109). Upon completion of the timing circuit, the electrical power supplied to the heater and the drive mechanism is disconnected (step S110).

The pouch laminator of the present invention may also have a selector switch (not shown) with an automatic and manual setting. When the selector switch is set to the automatic setting, the pouch laminator operates in the above described manner. When the selector switch is set to the manual setting, however, the pouch laminator operates in a continuous manner without an automatic start or shutoff.

In operation, the present invention can be applied with particular advantage to laminating a pouch at the office or the home. Since there are relatively few components in the pouch laminator of the present invention, it is lightweight, portable, compact in size, and inexpensive. In addition, since the pouch laminator of the present invention has an automatic start and an automatic shut off, it is very energy efficient. Furthermore, the user does not have to wait for the laminator to warm up to start laminating or to shut off when the laminator is finished.

Those skilled in the art to which the invention pertains may make modifications and other embodiments employing the principles of this invention without departing from its spirit or essential characteristics, particularly upon considering the foregoing teachings. The described embodiments are to be considered in all respects only as illustrative and not restrictive and the scope of the invention is, therefore, indicated by the appended claims rather than by the foregoing description. Consequently, while the invention has been described with reference to particular embodiments, modifications of structure, sequence, materials and the like would be apparent to those skilled in the art, yet still fall within the scope of the invention.

## Claims

1. A pouch laminator comprising:
a first side panel;
a second side panel spaced from and parallel to the first side panel;
a heater disposed between the first and second side panels, the heater having an entrance and an exit;
a first and a second roller disposed between the first and second side panels, the first and second rollers positioned near the entrance of the heater with the second roller vertically stacked on top of the first roller;
a third and a fourth roller disposed between the first and second side panels, the third and fourth rollers positioned near the exit of the heater with the fourth roller vertically stacked on top of the third roller;
a drive mechanism to drive the first, second, third, and fourth rollers;
a thermal sensor disposed near the heater; and
a pouch presence detector located near the first pair of rollers.

2. The pouch laminator of claim 1 wherein the drive mechanism comprises:
a first roller gear disposed on the second side panel and coupled to the first roller;
a second roller gear disposed on the second side panel and coupled to the second roller;
a third roller gear disposed on the second side panel and coupled to the third roller;
a fourth roller gear disposed on the second side panel and coupled to the fourth roller;
a motor having an output shaft; and
a drive gear coupled to the output shaft of the motor, the drive gear positioned to engage the first and third roller gears.

3. The pouch laminator of claim 1 wherein the heater includes a first and a second heat platen, the first heat platen spaced from the second heat platen.

4. The pouch laminator of claim 1 wherein at least a portion of the first, second, third, and fourth rollers is made of rubber.

5. The pouch laminator of claim 1 further comprising a timing circuit.

6. A method for laminating a pouch comprising the steps of:
providing a laminator having a heater with an entrance and exit, a first and a second roller vertically stacked at the entrance of the heater, a third and a fourth roller vertically stacked at the exit of the heater, a drive mechanism to drive the rollers, a thermal sensor near the heater, a pouch presence detector near the first and second rollers, and a timing circuit;
providing a pouch containing a substrate to be laminated;
detecting the presence of the pouch when the pouch is positioned near the first and second rollers;
applying electrical power to the drive mechanism to drive the rollers and feed the pouch into the first and second rollers;
applying electrical power to the heater and starting the timing circuit;
sensing the heater temperature;
applying electrical power to the drive mechanism to drive the rollers and move the pouch through the heater when the heater temperature reaches a set point; and
disconnecting electrical power to the heater and the drive mechanism when the timing circuit is completed.
